# FASCICULE DE BREVET EUROPEEN

(11) **EP 0 974 409 B1**
(45) Date de publication et mention de la délivrance du brevet: **14.11.2001**
(21) Numéro de dépôt: 98401857.2
(22) Date de dépôt: 21.07.1998
(51) Int. Cl.: B21D 22/02, B60N 2/48

(54) **Procédé de crantage de tubes ainsi que tube obtenu par la mise en oeuvre de ce procédé**
Verfahren zum Herstellen von Rastnuten in Rohren, sowie durch das Verfahren hergestellten Rohre
Method of notching tubes and tubes obtained by such a method

(43) Date de publication de la demande: 26.01.2000
(73) Titulaire: Etablissements Garconnet, 76510 Saint Nicolas d'Aliermont (FR); Vasseur, Jean-Pierre, 76510 Saint Vaast d'Equiqueville (FR)
(72) Inventeur: VASSEUR Jean-Pierre, 76510 ST Vaast d'Equiqueville (FR); GARCONNET Claude, 76510 St Nicolas D'Alt (FR); GARCONNET Dominique, 76510 St Nicolas D'Alt (FR)
(74) Mandataire: Cabinet HERRBURGER

(56) Documents cités:
- DE-U- 29 714 315
- FR-A- 2 612 096
- US-A- 4 679 850

## Description

La présente invention concerne un procédé permettant de pratiquer sur des tubes creux un crantage à angle vif sans enlèvement de matière, en conservant constante l'épaisseur de ces tubes et également sans déformation du diamètre extérieur et en conservant le fibrage du métal.

Dans de nombreux domaines de l'industrie, on est amené à équiper des tubes d'une série de crans de réglage.

Un tel crantage est, à titre d'exemple non limitatif, pratiqué dans le domaine de l'industrie automobile pour la réalisation d'« ossatures » d'appuis-tête réglables de véhicules automobiles, voir, par ex., DE-U-297 14 315.

Pour effectuer le crantage de tubes, on a déjà proposé soit d'effectuer un usinage avec enlèvement de matière, ce qui n'est que difficilement envisageable dans le cas de tubes creux, soit d'utiliser une presse, ce qui entraîne une déformation (affaissement) des tubes nécessitant la mise en oeuvre ultérieure d'un usinage complémentaire, ce sans permettre d'obtenir des crans à angle vif.

Or, la présence d'angles vifs est indispensable pour obtenir un accrochage franc et réglable en position.

Par suite, les « ossatures » des appuis-tête des véhicules automobiles sont, en règle générale, actuellement réalisées à partir de barres métalliques cylindriques pleines non tubulaires, ce qui augmente, dans une large mesure, leur poids et leur prix de revient.

La présente invention a pour objet de remédier à ces inconvénients en proposant un procédé permettant de pratiquer, sur des tubes creux, un crantage à angle vif sans enlèvement de matière.

Selon l'invention, on a pu, de manière surprenante, parvenir à ce but en mettant en oeuvre non pas une presse comme il avait déjà été proposé, mais une machine de rivetage équipée d'une demi-coquille fixe ainsi que d'une tête portant une bouterolle montée sur une broche coopérant avec des organes presseurs et dont l'axe est incliné par rapport à l'axe de la tête et soumis à un mouvement complexe se décomposant en un mouvement de translation et un mouvement orbital, on remplace la bouterolle de cette machine de rivetage par un poinçon adapté au profil du crantage à réaliser et en particulier à son angle vif, on introduit le tube à cranter entre le poinçon et la demi-coquille fixe et on commande les organes presseurs et, par suite, le déplacement de la broche de façon à permettre le crantage du tube.

Le procédé conforme à l'invention est défini dans la revendication 1. Selon un tel procédé on remplace la bouterolle d'une telle machine de rivetage par un poinçon adapté au profil du crantage à réaliser et en particulier à son angle vif, on introduit le tube à cranter entre le poinçon et la demi-coquille fixe et on commande les organes presseurs et, par suite, le déplacement de la broche de façon à permettre le crantage du tube.

On peut ainsi obtenir par déformation radiale des formes diverses de crans, sans enlèvement de matière, et en conservant un angle vif dans la partie d'accrochage, ceci sans déformation du diamètre extérieur du tube.

Selon une caractéristique préférentielle de l'invention, la machine de rivetage est une machine de rivetage à train épicycloïdal et calotte sphérique.

Lors de la mise en oeuvre d'une telle machine, le poinçon de crantage est soumis à un mouvement complexe se décomposant en un mouvement de translation et un mouvement orbital.

On a ainsi pu équiper des tubes de crans ayant une profondeur une fois et demie supérieure à leur épaisseur, sans perforation de la partie déformée.

Selon une forme de l'invention, on équipe la broche de la machine de rivetage d'un ensemble serre-flan dont la partie avant est susceptible d'enserrer le tube à cranter et de le plaquer contre la demi-coquille fixe.

Selon un autre mode de l'invention, on bloque en rotation le poinçon de crantage au moyen d'un anti-dévireur.

Les diamètres maximum et minimum des tubes pouvant être traités par le procédé conforme à l'invention ne sont pas limités. La profondeur et la surface à obtenir déterminent la puissance de la machine de rivetage.

A titre d'exemple, on a effectué des essais sur des tubes en acier ayant un diamètre externe de 11,70 mm et un diamètre interne de 7,80 mm ; l'obtention de crans ayant 2 mm de profondeur et 50 mm² de surface a nécessité la mise en oeuvre d'une puissance de 500 daN.

L'invention concerne également un tube creux obtenu par la mise en oeuvre du procédé susmentionné.

Un tel tube est caractérisé en ce qu'il est muni d'un crantage à angle vif pratiqué sans enlèvement de matière et en conservant constante l'épaisseur de ce tube.

Il est à noter que l'on connaissait déjà conformément au document DE-U-297 14 315 un dispositif de blocage en particulier adapté au réglage d'appuis-tête de véhicules automobiles qui est équipé d'au moins un élément tubulaire muni d'un crantage et d'au moins un élément de retenue coopérant avec ce crantage et pouvant venir en prise avec l'un des crans pour régler le dispositif en le bloquant temporairement.

Dans ce dispositif, la pièce tubulaire est renforcée dans la zone du crantage par un tronçon de tige inséré à sa partie interne ; de plus, l'épaisseur de cette pièce n'est pas maintenue constante après son crantage qui est obtenu par la mise en oeuvre d'un procédé de poinçonnage.

Les caractéristiques du procédé et des tubes qui font l'objet de l'invention seront décrites plus en détail en se référant aux dessins annexés dans lesquels :
- la figure 1 est une vue en perspective d'un tube conforme à l'invention,
- la figure 2 est une vue en coupe de ce tube,
- la figure 3 est une vue en coupe schématique de la machine de rivetage utilisée pour la mise en oeuvre de ce procédé,
- la figure 3a est une coupe schématique de la figure 3 selon l'axe A-A,
- les figures 4, 4a ; 5, 5a et 6, 6a représentent trois exemples de poinçons de crantage respectivement en vue en coupe et en vue de dessous.

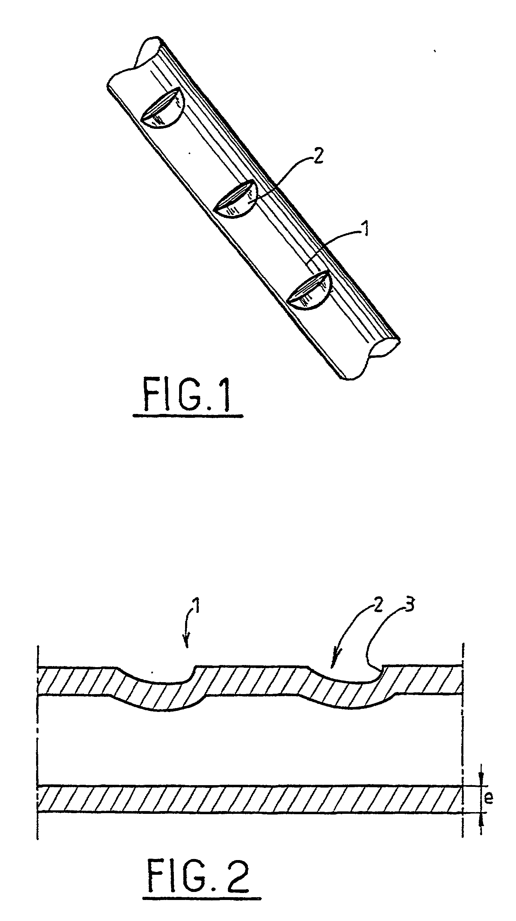

Selon la figure 1, le tube 1 est muni sur sa surface d'une série de crans 2 de profil déterminé.

Selon la figure 2, les crans 2 ont des angles vifs 3 et sont réalisés sans enlèvement de matière de sorte que l'épaisseur e du tube est toujours constante.

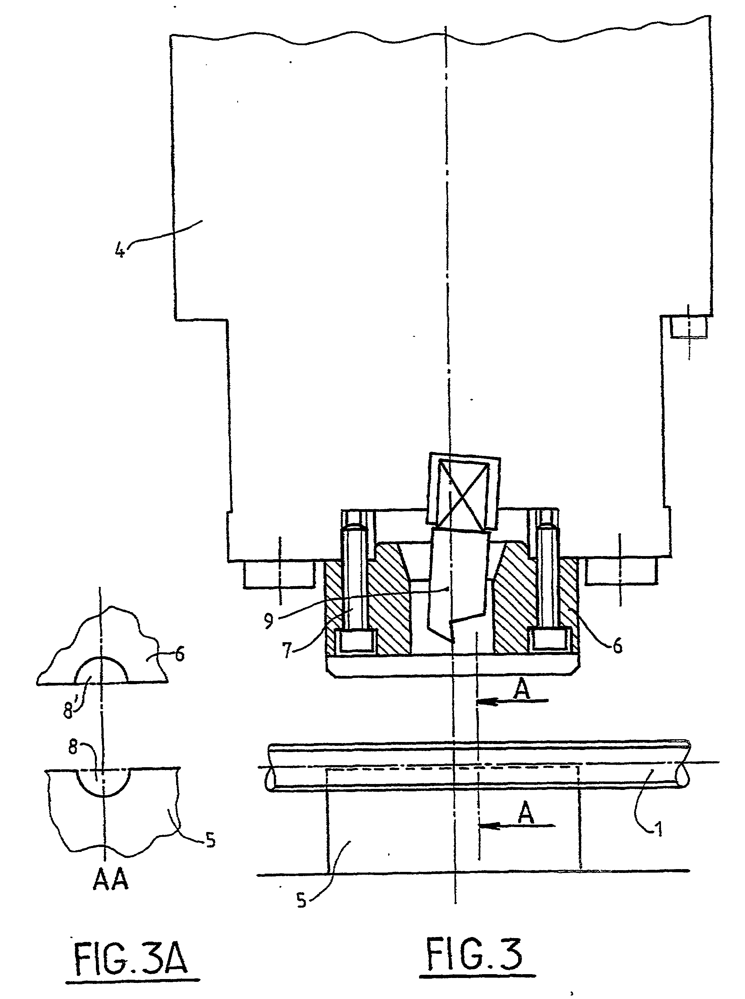

Selon la figure 3, la machine de rivetage 4 utilisée pour le crantage de tubes 1 est une machine à train épicycloïdal et calotte sphérique connue en elle-même qui, pour cette raison, ne sera pas décrite en détail dans le cadre de cet exposé.

Cette machine est équipée, d'une part, d'une demi-coquille fixe 5 et, d'autre part, d'une demi-coquille mobile ou serre-flan 6 fixée sur la tête de la machine 4 par l'intermédiaire de vis 7 coopérant avec- des manchons ou des ressorts en caoutchouc.

Selon la figure 3a, les deux éléments 5, 6 sont équipés de rainures 8, 8' situées en regard de façon à maintenir le tube 1 devant être cranté.

Par ailleurs, et comme représenté sur la figure 3, la machine 4 est également équipée d'un poinçon 9 emmanché dans le nez de celle-ci.

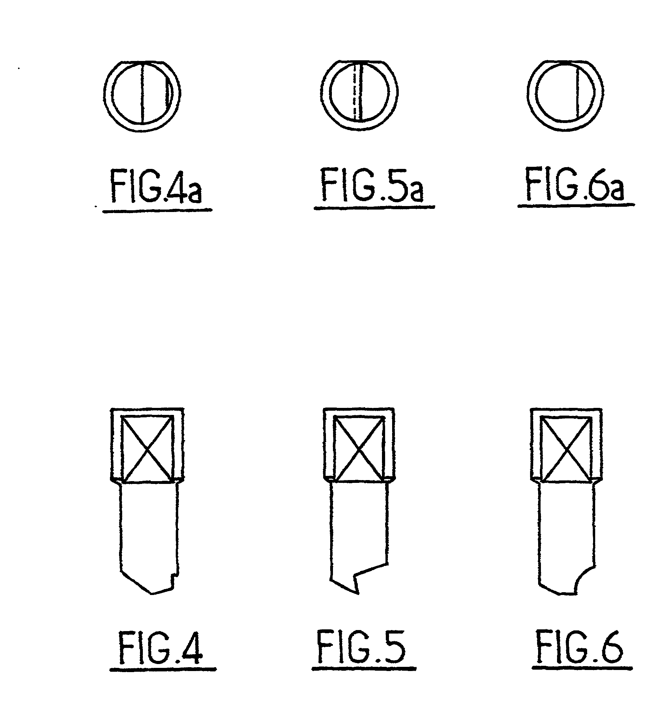

Les figures 4, 4a, 5, 5a et 6, 6a représentent des exemples de profil de poinçons 9 pouvant être utilisés en fonction du type de cran à obtenir.

## Revendications

1. Procédé permettant de pratiquer, sur des tubes creux (1), un crantage (2) à angle vif (3) **caractérisé en ce que** le crantage est pratiqué sans enlèvement de matière, en conservant constante l'épaisseur (e) de ces tubes (1) et également sans déformation du diamètre extérieur et en conservant le fibrage du métal, le procédé comprenant les étapes suivantes :
on met en oeuvre une machine de rivetage équipée d'une demi-coquille fixe (5) ainsi que d'une tête (4) portant une bouterolle montée sur une broche coopérant avec des organes presseurs et dont l'axe est incliné par rapport à l'axe de la tète (4) et soumis à un mouvement complexe se décomposant en un mouvement de translation et un mouvement orbital, on remplace la bouterolle de cette machine de rivetage par un poinçon (9) adapté au profil du crantage à réaliser et en particulier à son angle vif (3), on introduit le tube à cranter (1) entre le poinçon (9) et la demi-coquille fixe (5) et on commande les organes presseurs et, par suite, le déplacement de la broche de façon à permettre le crantage du tube (1).

2. Procédé selon la revendication 1,
**caractérisé en ce que**
la machine de rivetage (4) est une machine de rivetage à train épicycloïdal et calotte sphérique.

3. Procédé selon l'une quelconque des revendications 1 et 2,
**caractérisé en ce que**
l'on équipe la broche de la machine de rivetage d'un ensemble serre-flan (6) dont la partie avant est susceptible d'enserrer le tube à cranter et de le plaquer contre la demi coquille fixe (5).

4. Procédé selon l'une quelconque des revendications 1 à 3,
**caractérisé en ce que**
l'on bloque en rotation le poinçon de crantage (9) au moyen d'un anti-dévireur.

5. Tube creux muni d'un crantage à angle vif (3) obtenu par la mise en oeuvre du procédé selon l'une quelconque des revendications 1 à 4,
**caractérisé en ce qu'**
il est muni d'un crantage à angle vif (3) pratiqué sans enlèvement de matière, en conservant constante l'épaisseur de ce tube, et également sans déformation du diamètre extérieur et en conservant le fibrage du métal.

## Patentansprüche

1. Verfahren zum Erzeugen einer Rastkerbung (2) mit scharfer Kante (3) an hohlen Rohren (1), **dadurch gekennzeichnet, daß** die Rastkerbung ohne Materialabtrag unter Konstanthaltung der Dicke (e) der Rohre (1) und auch ohne Verformung des Außendurchmessers und unter Beibehaltung des Faserverlaufes des Metalls erzeugt wird, wobei das Verfahren die folgenden Schritte umfaßt:
Einsetzen einer Nietmaschine, die mit einer festen Halbschale (5) und einem Kopf (4) ausgestattet ist, der einen Döpper trägt, der an einem Zapfen montiert ist, der mit Preßorganen zusammenwirkt und dessen Achse in Bezug auf die Achse des Kopfes (8) geneigt ist und einer komplexen Bewegung unterzogen wird, die sich zusammensetzt aus einer Translationsbewegung und einer Umlaufbewegung, Ersetzen des Döppers dieser Nietmaschine durch einen an das Profil der zu erzeugenden Rastkerbung und insbesondere dessen scharfer Kante (3) angepaßten Dorn (9), Einführen des zu kerbenden Rohres (1) zwischen den Dorn (9) und die feste Halbschale (5) und Steuern der Preßorgane und infolgedessen der Bewegung des Zapfens, um die Rastkerbung des Rohres (1) zu ermöglichen.

2. Verfahren nach Anspruch 1, **dadurch gekennzeichnet, daß** die Nietmaschine (4) eine Nietmaschine mit Epizykloidalgetriebe und sphärischer Kalotte ist.

3. Verfahren nach einem beliebigen der Ansprüche 1 und 2, **dadurch gekennzeichnet, daß** der Zapfen der Nietmaschine mit einer Spannanordnung (6) ausgestattet wird, deren vorderer Bereich in der Lage ist, das zu kerbende Rohr einzuklemmen und gegen die feste Halbschale (5) zu drücken.

4. Verfahren nach einem beliebigen der Ansprüche 1 bis 3, **dadurch gekennzeichnet, daß** der Kerbdorn (9) mit Hilfe einer Drehhemmeinrichtung drehblockiert wird.

5. Hohles Rohr mit einer Rastkerbung mit scharfer Kante (3), erhalten durch Anwendung des Verfahrens nach einem beliebigen der Ansprüche 1 bis 4, **dadurch gekennzeichnet, daß** es mit einer Rastkerbung mit scharfer Kante (3) versehen ist, die ohne Materialabtrag, unter Konstanthaltung der Dicke des Rohres und auch ohne Verformung von dessen Außendurchmesser und unter Beibehaltung des Faserverlaufes des Metalls erzeugt ist.

## Claims

1. Method enabling notching (2) having a sharp edge (3) to be formed on hollow tubes (1), **characterised in that** the notching is formed without removing material, while keeping the thickness (e) of the tubes (1) constant and also without deforming the outside diameter and while preserving the grain orientation of the metal, the method comprising the following steps:
there is used a riveting machine which is equipped with a fixed half-shell (5) and also with a head (4) carrying a riveting die which is mounted on a spindle which cooperates with pressing means and the axis of which is inclined relative to the axis of the head (4) and which is subjected to a complex movement resolving into a translation movement and an orbital movement, the riveting die of the riveting machine is replaced by a punch (9) adapted to the shape of the notching to be produced and in particular to its sharp edge (3), the tube to be notched (1) is introduced between the punch (9) and the fixed half-shell (5), and the pressing means and, consequently, the displacement of the spindle are actuated in order to enable the tube (1) to be notched.

2. Method according to claim 1, **characterised in that** the riveting machine (4) is a riveting machine having a planetary gear train and a spherical cap.

3. Method according to either claim 1 or claim 2, **characterised in that** the spindle of the riveting machine is equipped with a blank-holder assembly (6), the front portion of which is capable of clasping the tube to be notched and placing it against the fixed half-shell (5).

4. Method according to any one of claims 1 to 3, **characterised in that** the notching punch (9) is locked in rotation by means of a clamping device.

5. Hollow tube provided with notching having a sharp edge (3), obtained by using the method according to any one of claims 1 to 4, **characterised in that** it is provided with notching having a sharp edge (3) formed without removing material, while keeping the thickness of the tube constant and also without deforming the outside diameter, and while preserving the grain orientation of the metal.
